# EUROPÄISCHE PATENTSCHRIFT

(11) **EP 2 241 505 B1**
(45) Veröffentlichungstag und Bekanntmachung des Hinweises auf die Patenterteilung: **13.06.2018**
(21) Anmeldenummer: 10000160.1
(22) Anmeldetag: 09.01.2010
(51) Int. Cl.: B64G 1/40, F02K 9/56, F02K 9/60, F02K 9/54

(54) **Blasenfalle für Treibstofftanks in Raumflugkörpern**
Bubble trap for propellant tanks in spacecraft
Piège à bulles pour réservoir d'ergol dans des engins spatiaux

(30) Priorität: 16.04.2009 DE 102009019002
(43) Veröffentlichungstag der Anmeldung: 20.10.2010
(73) Patentinhaber: ArianeGroup GmbH, 82024 Taufkirchen (DE)
(72) Erfinder: Behruzi, Kei Philipp, 28209 Bremen (DE); Michaelis, Mark, 28203 Bremen (DE)
(74) Vertreter: Marschall, Stefan

(56) Entgegenhaltungen:
- EP-A2- 0 250 084
- DE-B3-102005 035 356
- JP-B2- 3 646 998
- US-A- 5 279 323
- US-A- 5 901 557

## Beschreibung

Die Erfindung betrifft eine Blasenfalle für einen Treibstofftank zur Lagerung von Flüssigkeiten zum Betrieb der Triebwerke von Raumflugkörpern, mit einem als Fördermedium dienenden Treibgas sowie mit einer Anordnung zur Abscheidung des Treibgases aus dem flüssigen Treibstoff, bei der mittels Sieben und unter Ausnutzung der Oberflächenspannung eine Separation des Treibgases von der Flüssigkeit herbeigeführt wird.

Bei Raumflugkörpern, wie Satelliten oder Transfervehikeln, werden sowohl für die Triebwerke, die der Lageregelung im All dienen, als auch für die Triebwerke zur Durchführung des Apogäummanövers überwiegend flüssige Treibstoffe verwendet, die in hierfür geeigneten Behältern mitgeführt und aus diesen in der Regel unter Verwendung eines Treibgases in die Brenn- bzw. Reaktionskammern der entsprechenden Triebwerke gefördert werden. Als Treibgase werden üblicherweise Inertgase wie Helium (He) oder Stickstoff (N₂) eingesetzt, die unter Druck in den Treibstoffbehälter gepreßt werden und die dadurch den Treibstoff in das zum jeweiligen Triebwerk führende Rohrleitungssystem fördern. Wichtig ist dabei eine vollständige und sichere Trennung zwischen dem als Fördermedium dienenden Treibgas und dem in das Triebwerk gelangenden flüssigen Treibstoff, da letzterer bei Zündung unbedingt frei von Fremdgaseinlagerungen sein muss.

Standardmäßig wird die Separation des Treibgases vom Treibstoff entweder im Treibstofftank selbst oder in einer diesem nachgeschalteten separaten Blasenfalle herbeigeführt, so daß am Tankauslass der Treibstoff gasfrei zur Verfügung gestellt wird. Die Positionierung der Treibstofftanks im Raumfahrzeug hat dabei einen wichtigen Einfluß auf die Auslegung des Tanks. So wird in der Regel dafür gesorgt, daß der Tankauslass am tiefsten Punkt des Tanks in Richtung der wirkenden Hauptbeschleunigung, positioniert ist, so daß ein blasenfreies Füllen der Tanks am Boden und ein vollständiges Entleeren der Tanks im Orbit möglich ist. In manchen Fällen ist es jedoch erwünscht, den Tank mit dem Auslass entgegen der Hauptbeschleunigungsrichtung einzubauen, zum Beispiel bei einer Landeeinheit, die auf dem Mond landen soll, oder bei einem in horizontaler Lage zum Startplatz zu transportierender Treibstofftank. Unter diesen Umständen ist eine blasenfreie Treibstoffversorgung unter Umständen nicht mehr gewährleistet, da sich Gas in den Treibstoffleitungen ansammeln kann. Im Regelfall ist dann eine entsprechende Anpassung des Treibstofftanks oder die Verwendung einer diesem nachgeschalteten speziell ausgebildeten Blasenfalle erforderlich.

Die Menge an Treibgas, die sich während einer Raumflugmission im Leitungssystem befinden kann, ist im Allgemeinen bekannt. Weiterhin sind die Treibstofftanks mit Ausnahme der sich bereits im Leitungssystem befindlichen Gasanteile auch nach einem Gasdurchbruch noch in der Lage, blasenfreien Treibstoff zur Verfügung zu stellen. Die im Leitungssystem abzuscheidende Gasmenge hängt dabei stark vom Leitungsvolumen ab und ist normalerweise im Vergleich zum Volumen des Treibstofftanks gering.

Blasenfallen sind bereits in unterschiedlichen Ausführungen sowohl für den Einsatz am Boden als unter Weltraumbedingungen bekannt geworden. Eine Reihe von Druckschriften, wie die US 2001/0042441 A1, US 2007,0239098 A1, US 4,102,655, US 6,478,962 B1 und die US 2008/0171962 A1, beschreiben beispielsweise Anordnungen, die der Filterung von Gasblasen aus zirkulierendem Blut dienen. Da in diesem Fall die Gasblasen jedoch nicht über einen längeren Zeitraum gelagert werden müssen, sind die in diesen Druckschriften beschriebenen Konzepte grundsätzlich andere als sie bei Anforderungen in der Weltraumtechnik zugrunde liegen. Daher handelt es sich den aus diesen Druckschriften bekannt gewordenen Anordnungen um solche, die nicht für den Raumfahrtbereich konzipiert und einsetzbar sind.

Daneben sind aus der US 5,334,239 und der US 6,432,178 B2 Gasseparations-Anordnungen bekannt geworden, die auch für einen Einsatz in der Weltraumtechnik geeignet sind. So ist in der US 5,334,239 eine Blasenfalle beschrieben, bei der mittels einer in Rotation gebrachten Flüssigkeit eine Separation einer gasförmigen von einer flüssigen Phase herbeigeführt wird. Nachteilig kann dabei sein, daß eine durch Trägheit erzeugte Separation einen vergleichsweise großen Volumenstrom erfordert. Da insbesondere bei der Lageregelung aber teilweise auch sehr geringe Volumenströme für einen Betrieb über sehr kurze Zeiten benötigt werden, ist eine Anordnung zur Trennung der Phasen, wie sie in der US 5,334,239 beschrieben ist, in derartigen Fällen nicht geeignet.

Bei der aus der US 6,432,178 B2 bekannt gewordenen Gasseparations-Anordnung ist ein Sieb vorgesehen, das orthogonal zur Strömungsrichtung des Gas/Flüssigkeitsgemisches angeordnet ist und an dem sich die Gasblasen sammeln sollen. Nachteilig wirkt sich bei dieser bekannten Anordnung aus, daß der bereits mit Gas belegte Teil der Siebfläche die für die Durchströmung zur Verfügung stehende Fläche reduziert, so daß sich die Druckverluste lokal erhöhen können. Dies kann insbesondere insofern problematisch sein, als die von der Gasblase bedeckte Siebfläche bei der Ermittlung der Druckverluste mit berücksichtigt werden muss, was zu sehr großen erforderlichen Siebflächen führen kann. Wird die Gasmenge zu groß, so kann ferner unter gewissen Umständen die Strömungsgeschwindigkeit so hoch werden, daß auch Gas durch das Sieb hindurch gedrückt wird. Eine weitere Blasenfalle ist aus der US 5,279,323 bekannt, welche als nächstliegender Stand der Technik angesehen wird und alle Merkmale des Oberbegriffes des Anspruchs 1 offenbart.

Aufgabe der Erfindung ist es, eine Blasenfalle der eingangs genannten Art für einen Treibstofftank so auszubilden, daß auch geringe Mengen an zu förderndem Treibstoff diese Förderung jederzeit zuverlässig blasenfrei erfolgt.

Die Erfindung löst diese Aufgabe dadurch, daß bei einer derartigen Anordnung in einem rotationssymmetrischen Sammelbehälter eine Reihe von im wesentlichen radial im Bereich der Außenwand des Sammelbehälters angeordneten Leitblechen sowie in der Nähe des Auslassbereiches des Sammelbehälters ein in Richtung auf ein Auslassrohr hin sich konisch verjüngender, mit Durchgangsbohrungen versehener Gasabscheider und Siebe vorgesehen sind.

Bei der erfindungsgemäßen Blasenfalle werden die sich sammelnden Gasblasen in einem Reservoir mittels Oberflächenspannung auch gegen auftretende Störbeschleunigungen zuverlässig festgehalten. Die mit einer derartigen Blasenfalle nach der Erfindung ausgerüsteten Treibstofftanks sind somit insbesondere auch für einen Einsatz bei nur geringen Beschleunigungen im *µ*g-Bereich geeignet und damit speziell für den Einsatz in Raumflugkörpern.

Die erfindungsgemäß als Sammelbehälter ausgeführte Blasenfalle gewährleistet die Separation des Treibstoffes von seinem Treibgas, wenn dieses in das Leitungssystem gelangt ist und hält das Gas mittels kapillarer Steighilfen stabil zurück. Dabei erlaubt die Erfindung eine sichere Separation sowohl bei kleinen als auch bei großen Volumenströmen. Die in der Blasenfalle gelagerte Gasblase kann ferner über einen beliebig langen Zeitraum stabil gelagert werden, wobei auch typische Störungen, wie sie in Raumfahrzeugen während der unterschiedlichen Manöver auftreten, toleriert werden. Die spezielle Ausbildung der Blasenfalle nach der Erfindung gewährleistet dabei, daß sich kein Gas direkt an den Sieben anlagert und auf diese Weise Gasblasen auch über einen längeren Zeitraum stabil gehalten werden können, ohne daß sie das Strömungsverhalten und insbesondere die Druckverluste negativ beeinflussen.

Die Herstellkosten für die erfindungsgemäße Blasenfalle sind aufgrund ihres geringen für eine optimale Funktionstüchtigkeit erforderlichen Volumens vergleichsweise niedrig. Die Verwendung einer solchen Blasenfalle im Leitungssystem führt dazu, daß die Anforderungen hinsichtlich einer blasenfreien Treibstoffentnahme aus dem vorgelagerten Tank als Vorratsbehälter für den flüssigen Treibstoff erheblich reduziert werden können, da notfalls auch eine definierte Menge an Gas in der aus diesem Tank geförderten Flüssigkeit toleriert werden kann. Dies hat zur Folge, daß sich auch die Herstellungskosten für einen solchen Treibstofftank weiter reduzieren. Ferner können derartige Treibstofftanks in ihrer Konstruktion wesentlich vereinfacht werden, woraus sich nicht zuletzt eine erhebliche Massenersparnis ergibt, der das nur geringe zusätzliche Gewicht der erfindungsgemäßen Blasenfalle gegenüber steht.

Die Blasenfalle nach der Erfindung ist dabei so konzipiert, daß sie Standardelemente, wie sie im allgemeinen für Oberflächenspannungstanks verwendet werden, integriert, was zu einer weiteren Reduktion der Herstellungskosten führt. So können beispielsweise Standard-Siebadapter, wie sie in herkömmlichen Oberflächenspannungstanks verwendet werden und die für die Raumfahrt bereits qualifiziert sind, eingesetzt werden.

Nachfolgend soll die Erfindung anhand eines in der Zeichnung dargestellten Ausführungsbeispiels näher erläutert werden. Es zeigen:
- Fig. 1: eine perspektivische Darstellung einer Blasenfalle,
- Fig. 2: die Anordnung gemäß Fig. 1 in Explosionsdarstellung,
- Fig. 3: eine Darstellung des unteren Bereichs der Anordnung gemäß Fig. 1,
- Fig. 4: einen Schnitt durch die Blasenfalle,
- Fig. 5: den Strömungsverlauf, wenn die Blasenfalle vollständig mit Flüssigkeit gefüllt ist,
- Fig. 6: den Strömungsverlauf, wenn kleine Blasen in die Blasenfalle eindringen,
- Fig. 7: den Strömungsverlauf, wenn größere Mengen an Gas in die Blasenfalle eindringen und
- Fig. 8: den Strömungsverlauf, wenn die Blasenfalle ihre maximale Gasaufnahmekapazität erreicht hat.

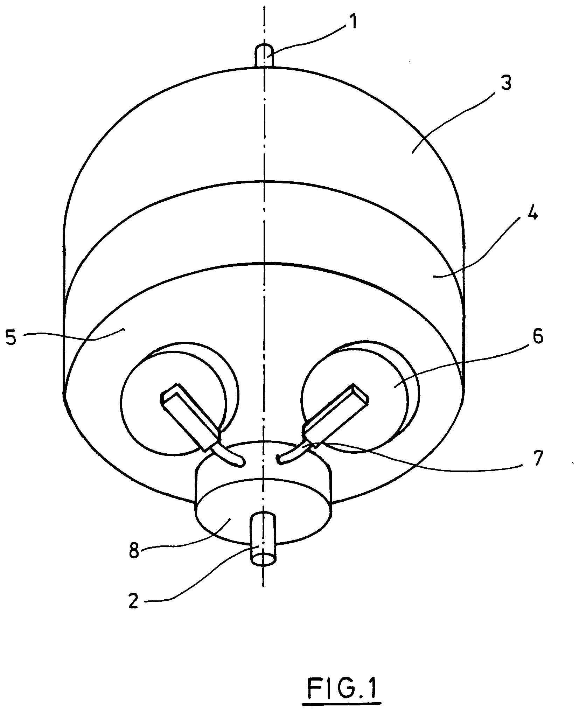

Bei der in Fig. 1 dargestellten Anordnung handelt es sich um eine Blasenfalle, die einem in der Zeichnung nicht dargestellten Treibstofftank für die Aufnahme von flüssigen und in der Regel aggressiven Treibstoffen für den Betrieb von Triebwerken von Raumflugkörpern, wie MMH, N₂O₄ oder Hydrazin, nachgeschaltet ist. Die Blasenfalle ist mit je einem Einlaßrohr 1 und einem Auslassrohr 2 versehen und wird im Bereich des Einlaßrohres 1 durch eine Halbschale 3 begrenzt. An diese Halbschale 3 schließen sich ein zylindrisches Schalensegment 4 und ein konisches Segment 5 an. Am konischen Segment 5 sind ferner eine Reihe von Siebadaptern 6 angeordnet, die über Röhren 7 mit einem Kollektor 8 verbunden sind. Der Kollektor 8 ist seinerseits direkt mit dem Auslassrohr 2 verbunden.

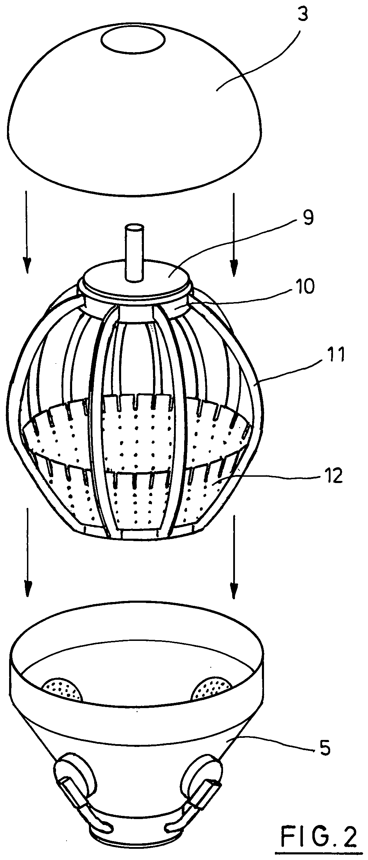

Bei der in Fig. 2 gezeigten Explosionsdarstellung umschließen die obere Halbschale 3 und das untere konische Segment 5 einen oberen Tankabschluß 9, eine Prallplatte 10, eine Reihe von Leitblechen 11, sogenannten Vanes, sowie einen unteren Siebkonus 12, der als Gasabscheider dient.

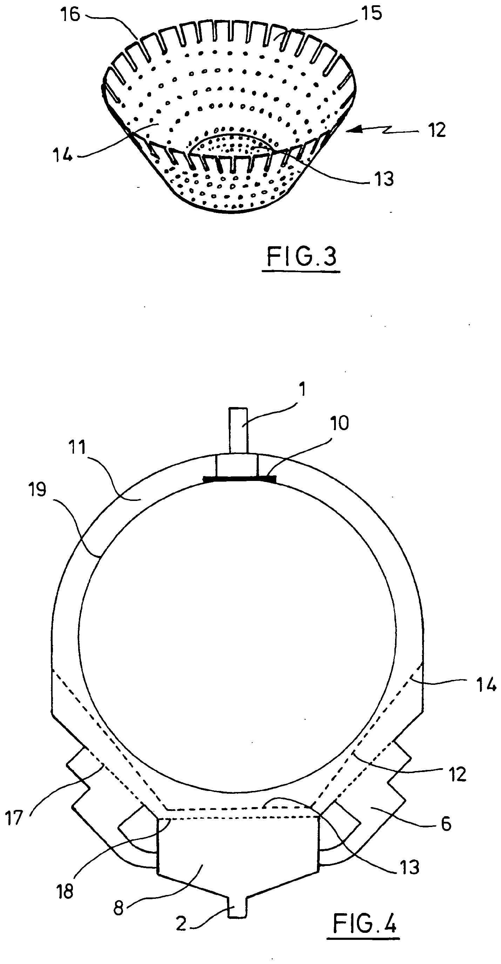

Der untere Siebkonus oder Gasabscheider 12 ist in Fig. 3 vergrößert dargestellt und weist, ähnlich einer Siebschüssel, einen flachen Boden 13 und einen konischen Randbereich 14 auf. Mit Ausnahme des oberen Teiles 15 dieses konischen Randbereiches 14 ist der Siebkonus 12 etwa gleichmäßig mit Durchgangsbohrungen versehen. Ferner befinden sich im oberen Teil 15 des konischen Randbereiches 14 gleichmäßig über den Umfang verteilt Schlitze 16.

Fig. 4 zeigt einen Schnitt durch die Blasenfalle. An der äußeren konischen Schale 5 befindet sich in einem konischen Bereich und angrenzend an den flachen Siebboden 13 eine Reihe von Sieben 17 und 18. Die Leitbleche 11 sind radial, d.h. orthogonal zur Fläche des Schalenelementes 3 angeordnet und werden zum Inneren der Blasenfalle hin jeweils durch einen im Fall des hier dargestellten Ausführungsbeispiels kreisförmigen Ausschnitt 19 begrenzt, wobei aber auch andere Formen möglich sind.

Der von den Leitblechen 11 derart begrenzte Innenraum bildet zusammen mit dem unteren Siebkonus 12 die Blasenfalle, die so ausgebildet ist, daß sie sich ohne Gaseinschluß vollständig mit Flüssigkeit füllen kann. Dieser Vorgang soll nachfolgend im Einzelnen erläutert werden.

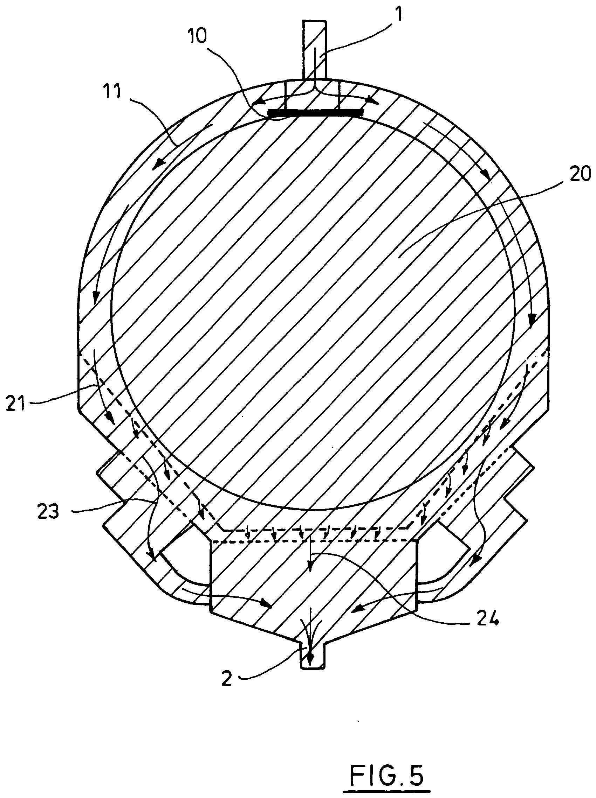

In Fig. 5 ist zunächst die über das Einlaßrohr 1 vollständig mit einem flüssigen Treibstoff gefüllte Blasenfalle dargestellt, wobei die Schraffur 20 die Flüssigkeit darstellen soll. Wird kein Gas in die Blasenfalle eingetragen, so verteilt sich die Flüssigkeit über das Einlaßrohr 1 und wird von der Prallplatte 10 entsprechend umgelenkt. Die Flüssigkeit bewegt sich dann vorwiegend entlang der Leitbleche 11 und fließt im konischen Randbereich 14 in Richtung der Siebe 17 und 18, angedeutet durch einen Pfeil 21, der die Fließrichtung der Flüssigkeit verdeutlichen soll. Die Blasenfalle ist dabei so ausgebildet, daß aufgrund des großen Umfangs des konischen Randbereiches 14 und der damit vorhandenen großen Durchtrittsfläche der sich einstellende Druckverlust gering ist. Die Flüssigkeit fließt weiter durch die Siebe 17 und 18, angedeutet durch Pfeile 23 und 24, und erreicht schließlich das Auslassrohr 2.

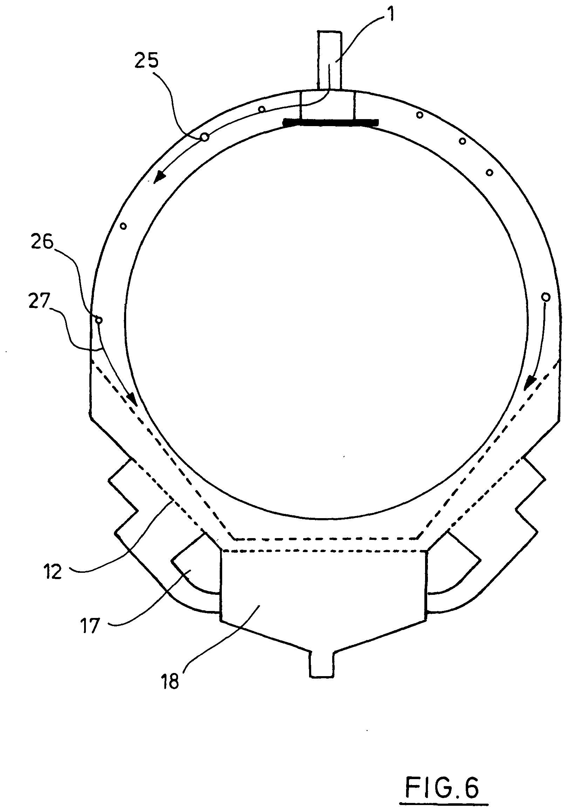

Fig. 6 zeigt den Fall, daß durch das Einlaßrohr 1 kleine Blasen 25 in die Blasenfalle gelangen. Sofern diese Blasen sehr klein sind, so lassen sie sich durch die Leitbleche 11 nicht abscheiden, da sie keinen Meniskus mit diesen Leitblechen oder Vanes 11 bilden. Daher fließen die kleinen Blasen 25 entlang der Leitbleche 11 in Richtung des Siebkonus 12, der als Gasabscheider wirkt. Die Löcher und Schlitze des Siebkonus 12 besitzen im Fall des hier beschriebenen Ausführungsbeispiels einen maximalen Durchmesser von etwa einem Millimeter, so daß fast alle kleineren Blasen 26 durch den Siebkonus 12 abgelenkt werden, angedeutet durch einen weiteren Pfeil 27. Sollten dennoch sehr kleine Blasen durch den Siebkonus 12 hindurch gelangen, so werden sie durch die Siebe 17 und 18 unterhalb des Siebkonus 12 festgehalten.

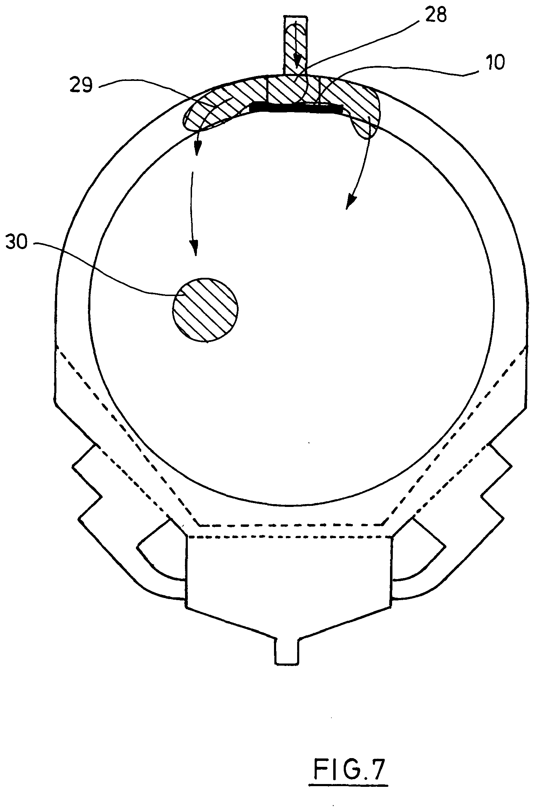

Tritt, wie in Fig. 7 schraffiert dargestellt, durch das Einlaßrohr 2 eine größere Menge an Gas in die Blasenfalle ein, so werden auch die Blasen durch die Prallplatte 10 in Richtung der Leitbleche 11 abgelenkt. Der Kapillardruck dieser Leitbleche oder Vanes bewirkt dabei, daß die Blasen in Richtung auf die Mitte der Blasenfalle, d.h. von den Wänden der Segmente 3 und 4 weg, abgelenkt werden, angedeutet durch einen Pfeil 29. Auf diese Weise sammelt sich eine Reihe von Blasen im Zentrum der Blasenfalle, wobei diese einzelnen Blasen mit der Zeit unter dem Einfluß der Schwerelosigkeit im Orbit zu einer einzigen großen Blase 30 zusammenwachsen.

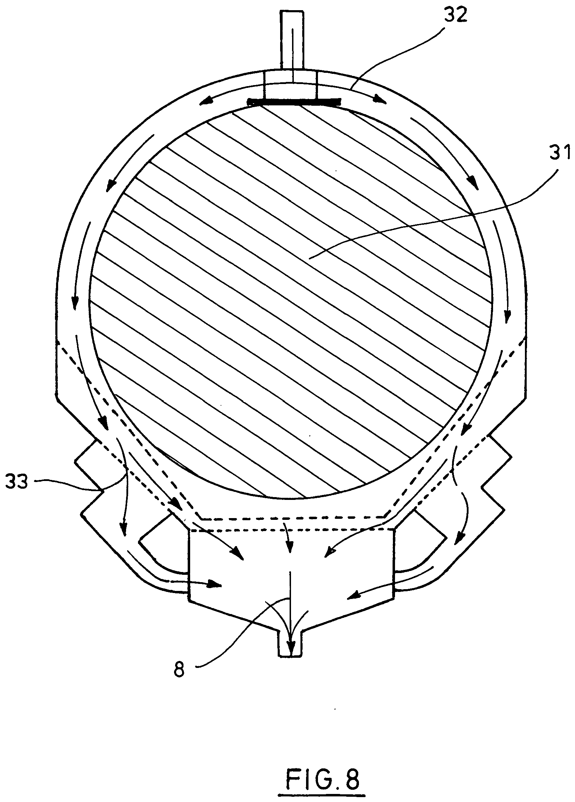

Über einen längeren Zeitraum sammelt sich auf diese Weise immer mehr Gas in der Blasenfalle an, bis die Gasblase schließlich die in Fig. 8 dargestellte maximalen Ausdehnung 31 einnimmt. Die Leitbleche 11 halten dabei die Blase stabil im Zentrum der Blasenfalle. Die Anzahl der Leitbleche oder Vanes kann je nach den zu erwartenden auftretenden Beschleunigungen so dimensioniert werden, daß ihre Kapillarkraft die Blase zuverlässig in der Mitte der Blasenfalle festhält. Ist der Innenbereich, wie in Fig. 8 dargestellt, vollständig gefüllt, so hat die Blasenfalle ihre maximale Aufnahmekapazität erreicht. Wird dann weiterhin Flüssigkeit zugeführt, so fließt diese, wie durch Pfeile 32 und 33 angedeutet, über den zwischen den Leitblechen 11 bestehenden Randbereich unmittelbar zum Kollektor 8.

Auf diese Weise ermöglicht die dem Treibstofftank nachgeschaltete Blasenfalle die Abscheidung einer definierten Gasmenge aus einer Flüssigkeit, wobei auch Störungen, wie sie standardmäßig in Raumfahrzeugen auftreten können, toleriert werden. Die Blasenfalle läßt sich dabei so dimensionieren, daß die in ihr befindliche Restmenge an Flüssigkeit gegenüber dem Gesamtvolumen sehr gering wird. Optimal wird der Bereich zwischen den Leitblechen 11 vollständig mit Gas gefüllt, wodurch erreicht wird, daß die in der Blasenfalle verbleibende Restmenge an Flüssigkeit minimal wird.

## Patentansprüche

1. Blasenfalle für einen Treibstofftank zur Lagerung von Flüssigkeiten zum Betrieb der Triebwerke von Raumflugkörpern, mit einem als Fördermedium dienenden Treibgas sowie mit einer Anordnung zur Abscheidung des Treibgases aus dem flüssigen Treibstoff, bei der in einem Sammelbehälter mittels Sieben und unter Ausnutzung der Oberflächenspannung eine Separation des Treibgases von der Flüssigkeit herbeigeführt wird, wobei in einem rotationssymmetrischen Sammelbehälter eine Reihe von im wesentlichen radial im Bereich der Außenwand (3-5) des Sammelbehälters angeordneten Leitblechen (11) vorgesehen sind, **dadurch gekennzeichnet, dass** in der Nähe des Auslassbereiches des Sammelbehälters ein in Richtung auf ein Auslassrohr (2) hin sich konisch verjüngender, mit Durchgangsbohrungen versehener Gasabscheider (12) und Siebe (17, 18) vorgesehen sind.

2. Blasenfalle gemäß Anspruch 1, **dadurch gekennzeichnet, daß** die Siebe (17, 18) sowohl im konischen Bereich (14) des Gasabscheiders (12) als auch im Bereich von dessen flach ausgebildeter Unterseite angeordnet sind.

3. Blasenfalle gemäß Anspruch 1 oder 2, **dadurch gekennzeichnet, daß** der Spalt zwischen dem Gasabscheider (12) und einer Außenwand (5) der Blasenfalle mit zunehmendem Durchmesser des Gasabscheiders (12) zunimmt.

4. Blasenfalle gemäß einem der Ansprüche 1 bis 3, **dadurch gekennzeichnet, daß** der Gasabscheider (12) im oberen Teil (15) seines konischen Randbereiches (14) gleichmäßig über den Umfang verteilte Schlitze (16) aufweist.

5. Blasenfalle gemäß einem der Ansprüche 1 bis 4, **dadurch gekennzeichnet, daß** ein mit dem Auslassrohr (2) verbundener Kollektor (8) vorgesehen ist.

6. Blasenfalle gemäß einem der Ansprüche 1 bis 5, **dadurch gekennzeichnet, daß** in der Nähe eines Einlassrohres (1) eine Prallplatte (10) vorgesehen ist.

## Claims

1. A bubble trap for a fuel tank for storing liquids for operating the power units of spacecraft, having a propellant gas used as flow medium and also having an arrangement for separating the propellant gas from the liquid fuel, in which a separation of the propellant gas from the liquid is brought about in a collection chamber by means of sieves and utilizing the surface tension, a series of guide plates (11), arranged essentially radially in the region of the outer wall (3-5) of the collection chamber, being provided in a rotationally symmetrical collection chamber, **characterized in that** a gas separator (12), tapering in a conical manner in the direction of an outlet pipe (2) and provided with through holes, and sieves (17, 18) are provided in the vicinity of the outlet region of the collection container.

2. The bubble trap according to Claim 1, **characterized in that** the sieves (17, 18) are arranged both in the conical region (14) of the gas separator (12) and in the region of the flat constructed underside thereof.

3. The bubble trap according to Claim 1 or 2, **characterized in that** the gap between the gas separator (12) and an outer wall (5) of the bubble trap increases with increasing diameter of the gas separator (12).

4. The bubble trap according to one of Claims 1 to 3, **characterized in that** the gas separator (12) has slots (16) distributed uniformly over the circumference in the upper part (15) of the conical edge region (14) of the gas separator.

5. The bubble trap according to one of Claims 1 to 4, **characterized in that** a collector (8) connected to the outlet pipe (2) is provided.

6. The bubble trap according to one of Claims 1 to 5, **characterized in that** a baffle plate (10) is provided in the vicinity of an inlet pipe (1).

## Revendications

1. Piège à bulles pour un réservoir de carburant destiné au stockage de liquides pour le fonctionnement des groupes motopropulseurs d'engins spatiaux, avec un gaz propulseur servant de milieu de transport ainsi qu'avec un agencement pour séparer le gaz propulseur du carburant liquide, pour lequel une séparation entre le gaz propulseur et le liquide est provoquée dans un réservoir collecteur au moyen de tamis et en utilisant la tension de surface, une série de tôles de guidage (11) disposées pour l'essentiel radialement dans la zone de la paroi extérieure (3-5) du réservoir collecteur est prévue dans un réservoir collecteur symétrique en rotation, **caractérisé en ce qu'**à proximité de la zone de sortie du réservoir collecteur sont prévus un séparateur de gaz (12) se rétrécissant de façon conique en direction d'un conduit de sortie (2), doté de trous de passage et des tamis (17, 18).

2. Piège à bulles selon la revendication 1, **caractérisé en ce que** les tamis (17, 18) sont disposés tant dans la zone conique (14) du séparateur de gaz (12) que dans la zone de sa face inférieure constituée plate.

3. Piège à bulles selon la revendication 1 ou 2 **caractérisé en ce que** l'interstice entre le séparateur de gaz (12) et une paroi extérieure (5) du piège à bulles augmente avec un diamètre croissant du séparateur de gaz (12).

4. Piège à bulles selon l'une quelconque des revendications 1 à 3, **caractérisé en ce que** le séparateur de gaz (12) comporte dans la partie supérieure (15) de sa zone de bordure conique (14) des fentes (16) réparties de façon uniforme sur la périphérie.

5. Piège à bulles selon l'une quelconque des revendications 1 à 4, **caractérisé en ce qu'**un collecteur (8) relié au conduit de sortie (2) est prévu.

6. Piège à bulles selon l'une quelconque des revendications 1 à 5, **caractérisé en ce qu'**une plaque déflectrice (10) est prévue à proximité d'un conduit d'admission (1).
